Europäisches Patentamt

European Patent Office

Office européen des brevets

(11) Numéro de publication : **0 545 857 A1**

(19)

# (12) DEMANDE DE BREVET EUROPEEN

(21) Numéro de dépôt : **92810876.0**

(51) Int. Cl.⁵ : **E01C 7/14, C04B 14/28**

(22) Date de dépôt : **10.11.92**

(30) Priorité : **02.12.91 CH 3519/91**

(43) Date de publication de la demande :
**09.06.93 Bulletin 93/23**

(84) Etats contractants désignés :
**DE ES FR IT**

(71) Demandeur : **Astié, René**
**1, chemin Paul Rose**
**CH-1213 Onex (CH)**

(72) Inventeur : **Astié, René**
**1, chemin Paul Rose**
**CH-1213 Onex (CH)**

(54) **Matériau pour revêtement routier et procédé pour la fabrication d'un revêtement routier avec un tel matériau.**

(57) Ce matériau comprend de la matière sèche constituée par des granulats calcaires concassés distribués selon une courbe granulométrique déterminée, 4 à 10 % de la masse de la matière sèche en ciment et 5 à 8 % de la masse de la matière sèche d'eau. La quantité d'eau optimale ayant été déterminée par un essai Proctor.

La mise en place de ce matériau se fera au moyen d'un finisseur pour les enrober.

FIG 1

EP 0 545 857 A1

L'invention a pour objet un matériau pour revêtement routier et un procédé pour fabriquer un revêtement routier avec un tel matériau.

Actuellement la plupart des revêtements routiers sont faits de granulats enrobés par du bitume ou du goudron, béton bitumineux. Ces revêtements donnent entière satisfaction. Toutefois, dans certains cas, par exemple pour des chemins d'exploitation forestiers ou ruraux, ils sont chers et ne sont pas agréables pour la marche et pour la vue.

On a déjà cherché à fabriquer des routes sans revêtements bitunineux;en général ces chemins donnent satisfaction, mais lorsqu'un certain trafic de véhicules automobiles les utilisent ils se dégradent rapidement.

La présente invention a pour but de fournir un matériau qui ne présente pas les défauts des matériaux bitumeux et des matériaux des chemins en terre battue, tout en étant facile à mettre en place.

Le titulaire a utilisé le fait que le ciment, notamment le ciment Portland N, avait une réaction favorable avec les granulats calcaires. De plus, dans une forme d'exécution préférée, il a découvert une granulométrie qui donne des résultats supérieurs. Enfin la quantité d'eau optimale nécessaire a été déterminée par des essais Proctor fait en laboratoire.

L'invention sera mieux comprise à la lecture de la description de plusieurs exemples de réalisation en regard des dessins sur lesquels

la figure 1      représente la courbe de la granulométrie des refus cumulés pour les granulats d'une forme d'exécution de l'invention préférée,

la figure 2      représente le graphique des essais de compactage Proctor pour trois exemples de matériau selon l'invention,

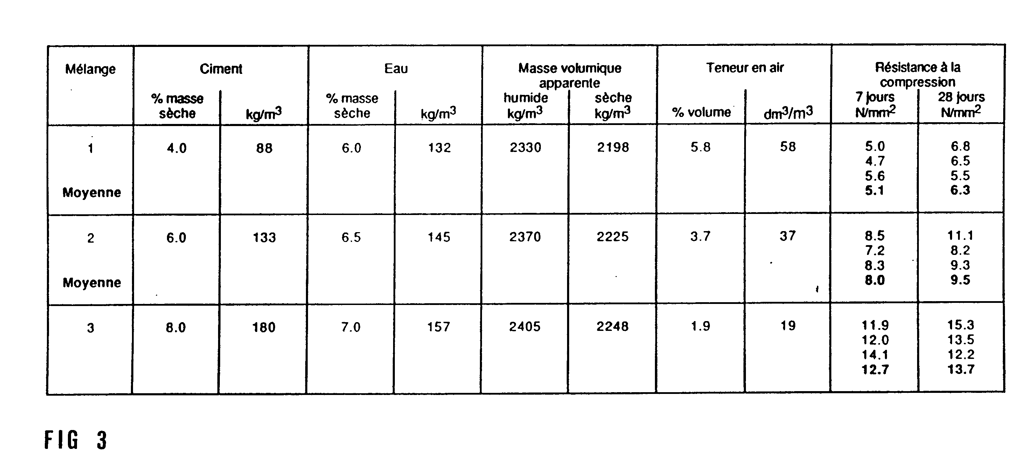

la figure 3      représente un tableau récapitulatif de valeurs d'essais.

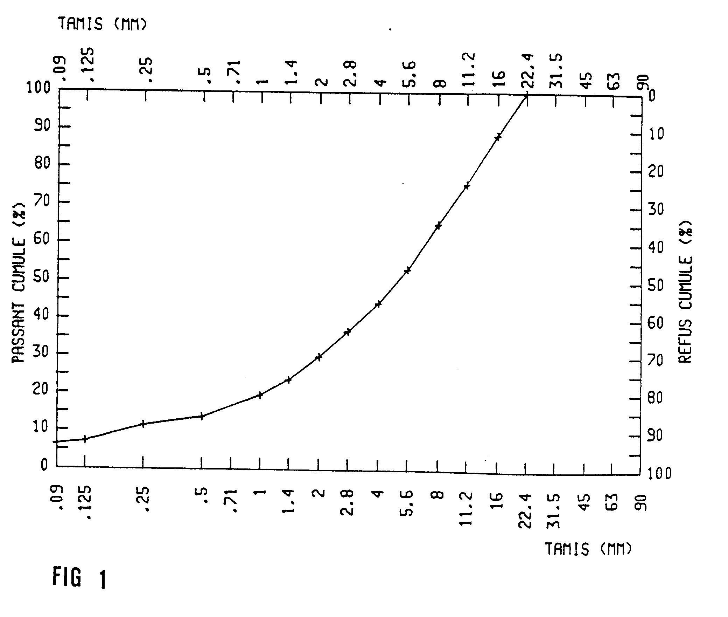

Pour fabriquer un matériau pour revêtement routier, notamment pour des chemins ruraux ou des chemins d'exploitation forestiers, suivant la présente invention, on malaxe des granulats constitués de calcaire concassé distribués selon la courbe de la figure 1 qui est formulée par les valeurs suivantes :

| TAMIS (MM) | REFUS CUMULE (G) | REFUS CUMULE (%) | PASSANT CUMULE (%) | % PAR CLASSE |
|---|---|---|---|---|
| 22.4 | .0 | .00 | 100.00 | .00 |
| 16 | 1249.0 | 11.20 | 88.80 | 11.20 |
| 11.2 | 2696.0 | 24.18 | 75.82 | 12.98 |
| 8 | 3865.0 | 34.66 | 65.34 | 10.48 |
| 5.6 | 5209.0 | 46.71 | 53.29 | 12.05 |
| 4 | 6213.0 | 55.72 | 44.28 | 9.00 |
| 2.8 | 7052.0 | 63.24 | 36.76 | 7.52 |
| 2 | 7814.0 | 70.07 | 29.93 | 6.83 |
| 1.4 | 8520.0 | 76.41 | 23.59 | 6.33 |
| 1 | 8985.0 | 80.58 | 19.42 | 4.17 |
| .5 | 9638.0 | 86.43 | 13.57 | 5.86 |
| .25 | 9886.0 | 88.66 | 11.34 | 2.22 |
| .125 | 10360.0 | 92.91 | 7.09 | 4.25 |
| .09 | 10445.0 | 93.67 | 6.33 | .76 |
| FOND | 11151.0 | 100.00 | .00 | 6.33 |

avec 4 à 10 % de la masse sèche de ciment Portland normal (N) et 5 à 8 % de la masse sèche d'eau.

Les quantités de ciment Portland meuvent varier ainsi que la quantité d'eau. Pour la quantité d'eau, cette dernière sera déterminée par un essai Proctor en prenant l'optimum.

Afin de mieux comprendre l'invention nous rapellerons ce que l'on entend par essai Proctor.

Les essais de compactage permettent de déterminer la teneur en eau optimale d'un sol et le poids volumique apparent sec maximal correspondant, pour une énergie de compactage donnée.

Un échantillon est compacté en 3 ou 5 couches dans un roule cylindrique à l'aide d'une dame de poids P tombant librement d'une hauteur H. L'énergie "spécifique" de compactage est alors définie par :

$$E = \frac{P \cdot H \cdot n}{V} \quad (mJ \cdot mm^{-3})$$

n : nombre total de coups de dame

V : volume de l'échantillon en $mm^3$

P en N et H en mm.

Après compactage de l'échantillon, on mesure son poids volumique apparent humide et sa teneur en eau, ce qui permet de calculer son poids volumique apparent sec.

L'essai est répété pour diverses teneurs en eau croissantes.

Les essais effectués avec le roule AASHTO (American Association of State Highway and Transportation Officials) sont appelés essais Proctor.

| Moule | | AASHO | |
|---|---|---|---|
| Diamètre | mm | 101,6 | |
| Hauteur | mm | 117,0 | |
| Volume | mm³ | 948·10³ | |
| Ø max. des grains | mm | 8 | |
| Ø de la dame | mm | 51 | |
| Energie de compactage | | Stand. | Mod. |
| Poids dame | N | 24,4 | 44,5 |
| Hauteur de chute | mm | 305 | 457 |
| Nombre de couches | | 3 | 5 |
| Coups par couche | | 25 | 25 |
| Energie spécifique | mJ ·mm⁻³ | 0,59 | 2,68 |

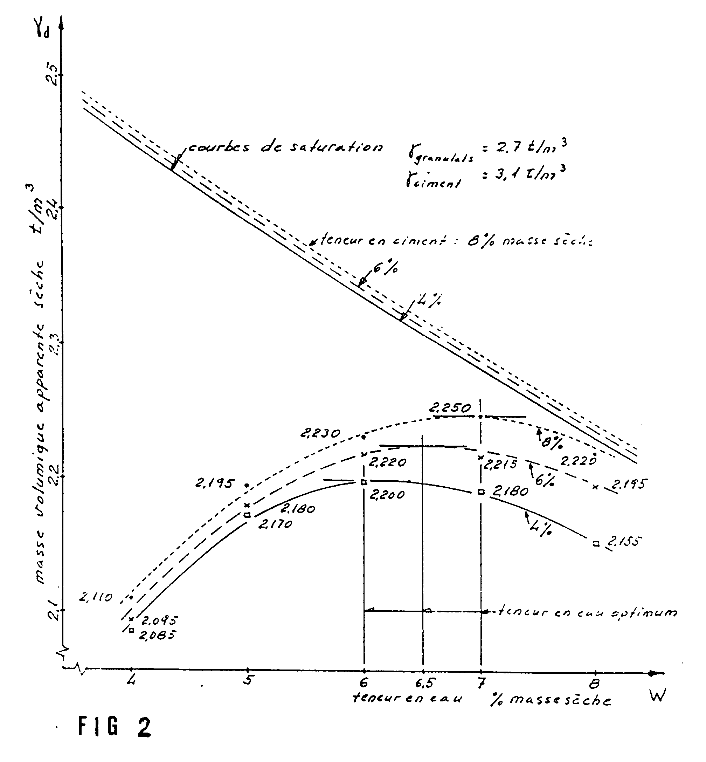

Comme on peut le voir sur la figure 2, les valeurs de w et de $\gamma_d$ obtenues pour chaque éprouvette compactée sont reportées en graphique. La courbe obtenue ou courbe de Proctor présente un maximum ($\gamma_d$ max) pour la teneur en eau optimale de compactage. Par la suite trois exemples de matériaux ont été testés.

Premier exemple :

4 % de ciment Portland N de la matière sèche
6 % d'eau de la ratière sèche

Deuxième exemple

6 % de ciment Portland N de la matière sèche
6,5 % d'eau de la matière sèche

Troisième exemple

8 % de ciment Portland N de la matière sèche
7 % d'eau de la matière sèche.

Les résultats de résistance de ces trois exemples de réalisation sont montrés sur le tableau 1 à la figure

3. On veillera toutefois à ne pas trop augmenter les quantités de ciment afin de ne pas créer une surface trop rigide, ce qui pourrait engendrer une fissuration importante.

L'invention comprend aussi la fabrication d'un revêtement routier avec un matériau comme défini ci-devant.

La mise en place du matériau se fait au moyen d'un finisseur pour des matériaux enrobés. Le finisseur est une machine recevant les matériaux destinés à former le tapis d'une chaussée prêts à être mis en oeuvre et les déversant sur la route, les nivelant, lissant et damant, laissant derrière elle la chaussée terminée. Dans le cas présent on versera dans le finisseur un matériau selon l'invention dont quelques exemples ont été exposés ci-dessus et on laissera la route fermée environ 3 jours afin de permettre au ciment de faire prise. L'épaisseur du revêtement sera de 8 à 10 cm.

Il est bien clair qu'avant la mise en oeuvre du finisseur le soubassement de la route aura été fait.


**Revendications**

1. Matériau pour revêtement routier, caractérisé en ce qu'il comprend de la matière sèche constituée par des granulats calcaires concassés, 4 à 10 pour cents de la masse sèche de ciment et 5 à 8 % de la masse de matière sèche d'eau.

2. Matériau selon la revendication 1, caractérisé en ce que les granulats sont distribués selon la courbe définie par les valeurs ci-dessous

| TAMIS (MM) | REFUS CUMULE (G) | REFUS CUMULE (%) | PASSANT CUMULE (%) | % PAR CLASSE |
|---|---|---|---|---|
| 22.4 | .0 | .00 | 100.00 | .00 |
| 16 | 1249.0 | 11.20 | 88.80 | 11.20 |
| 11.2 | 2696.0 | 24.18 | 75.82 | 12.98 |
| 8 | 3865.0 | 34.66 | 65.34 | 10.48 |
| 5.6 | 5209.0 | 46.71 | 53.29 | 12.05 |
| 4 | 6213.0 | 55.72 | 44.28 | 9.00 |
| 2.8 | 7052.0 | 63.24 | 36.76 | 7.52 |
| 2 | 7814.0 | 70.07 | 29.93 | 6.83 |
| 1.4 | 8520.0 | 76.41 | 23.59 | 6.33 |
| 1 | 8985.0 | 80.58 | 19.42 | 4.17 |
| .5 | 9638.0 | 86.43 | 13.57 | 5.86 |
| .25 | 9886.0 | 88.66 | 11.34 | 2.22 |
| .125 | 10360.0 | 92.91 | 7.09 | 4.25 |
| .09 | 10445.0 | 93.67 | 6.33 | .76 |
| FOND | 11151.0 | 100.00 | .00 | 6.33 |

3. Matériau selon l'une des revendications 1 et 2, caractérisé en ce qu'il comprend 7,5 à 8,5 pour cents de la masse de matière sèche de ciment en environ 7 pour cents de la masse de matière sèche d'eau.

4. Procédé de fabrication d'un revêtement routier avec un matériau selon l'une des revendications 1 à 3, caractérisé en ce que l'on mélange les granulats avec l'eau et le ciment et en ce pou'on les met en place au moyen d'un finisseur pour enrober.

5. Procédé de fabrication selon la revendication 4, caractérisé en ce que le revêtement est mis en place avec une épaisseur comprise entre 8 à 12 cm de préférence 8 à 10 cm et qu'après la sortie du finisseur il est soumis à un rouleau non vibrant.

FIG 1

FIG 2

EP 0 545 857 A1

| Mélange | Ciment | | Eau | | Masse volumique apparente | | Teneur en air | | Résistance à la compression | |
|---|---|---|---|---|---|---|---|---|---|---|
| | % masse sèche | kg/m³ | % masse sèche | kg/m³ | humide kg/m³ | sèche kg/m³ | % volume | dm³/m³ | 7 jours N/mm² | 28 jours N/mm² |
| 1 <br><br> Moyenne | 4.0 | 88 | 6.0 | 132 | 2330 | 2198 | 5.8 | 58 | 5.0<br>4.7<br>5.6<br>5.1 | 6.8<br>6.5<br>5.5<br>6.3 |
| 2 <br><br> Moyenne | 6.0 | 133 | 6.5 | 145 | 2370 | 2225 | 3.7 | 37 | 8.5<br>7.2<br>8.3<br>8.0 | 11.1<br>8.2<br>9.3<br>9.5 |
| 3 | 8.0 | 180 | 7.0 | 157 | 2405 | 2248 | 1.9 | 19 | 11.9<br>12.0<br>14.1<br>12.7 | 15.3<br>13.5<br>12.2<br>13.7 |

FIG 3

Office européen
des brevets

**RAPPORT DE RECHERCHE EUROPEENNE**

Numero de la demande

EP    92 81 0876

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | STRASSEN VND TIEFBAU vol. 36, no. 6, Juin 1982, ISERNHAGEN DE pages 35 - 40 BINNEWIES 'BÉTONPACT-EIN TROCKEN VERDICHTETER BETON' --- | 1,4 | E01C7/14 C04B14/28 |
| A | STRASSEN VND TIEFBAU vol. 42, no. 10, Octobre 1988, ISERNHAGEN DE pages 8 - 11 VOLLPRACHT 'GÜNSTIGE ENTWICKLUNGEN FÜR WALZBETON' --- | 1-5 | |
| A | EP-A-0 350 365 (SCREG) * le document en entier * --- | 1,3,4 | |
| A | EP-A-0 207 920 (CHANTIER BERTRAND) * le document en entier * ----- | 1 | |

DOMAINES TECHNIQUES RECHERCHES (Int. Cl.5 )

E01C
C04B

Le présent rapport a été établi pour toutes les revendications

| Lieu de la recherche | Date d'achèvement de la recherche | Examinateur |
|---|---|---|
| LA HAYE | 17 FEVRIER 1993 | DIJKSTRA G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)